# EUROPÄISCHE PATENTSCHRIFT

(11) **EP 1 851 599 B1**
(45) Veröffentlichungstag und Bekanntmachung des Hinweises auf die Patenterteilung: **09.05.2018**
(21) Anmeldenummer: 06701391.2
(22) Anmeldetag: 20.01.2006
(51) Int. Cl.: G05D 1/02

(54) **VERFAHREN ZUM BETREIBEN EINER ANLAGE UND FAHRERLOSES TRANSPORTSYSTEM**
METHOD FOR OPERATING AN INSTALLATION AND A DRIVERLESS TRANSPORT SYSTEM
PROCEDE POUR FAIRE FONCTIONNER UNE INSTALLATION ET SYSTEME DE TRANSPORT SANS CONDUCTEUR

(30) Priorität: 12.02.2005 DE 102005006554
(43) Veröffentlichungstag der Anmeldung: 07.11.2007
(73) Patentinhaber: SEW-EURODRIVE GmbH & Co. KG, 76646 Bruchsal (DE)
(72) Erfinder: ESCURIOLA ETTINGSHAUSEN, Manuel, 65347 Eltville (DE); NICKLIS, Stephan, 64372 Ober-Ramstadt (DE)
(86) Internationale Anmeldenummer: PCT/EP2006/000491
(87) Internationale Veröffentlichungsnummer: WO 2006/084556

(56) Entgegenhaltungen:
- WO-A-2004/085965
- US-A- 4 063 699
- US-A- 4 940 925

## Beschreibung

Die Erfindung betrifft ein Verfahren zum Betreiben einer Anlage und ein fahrerloses Transportsystem. Dazu zählen auch schienengebundene oder schienenlose Systeme. Auch mobile Montageplattformen zählen dazu.

Aus der WO 2004/085965 A1 ist ein fahrerloses Minenfahrzeug bekannt, bei dem der Fahrweg aus einzelnen Segmenten zusammengesetzt ist. Diese Segmente enthalten zumindest Start- und Endpunkte innerhalb eines Koordinatensystems sowie eine eindeutige Kennung. Alle Segmente sind in der Steuerung des Minenfahrzeugs vorgehalten. Eine zentrale Steuereinheit muss im Idealfall daher nur eine Abfolge an Kennungen senden, um das Fahrzeug an eine bestimmte Stelle zu leiten.
Nachteilig dabei ist, dass jedes Minenfahrzeug individuell angesteuert werden muss und bei Streckenänderungen die Segment-Daten in allen Fahrzeugen zunächst ergänzt oder geändert werden müssen.

Der Erfindung liegt daher die Aufgabe zugrunde, denAufwand bei einer Anlage zu reduzieren, insbesondere den technischen Aufwand beim Entwickeln und Einrichten und Betreiben sowie auch den finanziellen Aufwand durch Erhöhung der Standzeit.
Erfindungsgemäß wird die Aufgabe bei dem Verfahren nach den in Anspruch 1 und bei dem fahrerlosen Transportsystem angegebenen nach den in Anspruch 5 genannten Merkmalen gelöst.
Wesentliche Merkmale der Erfindung bei dem Verfahren sind, dass die Anlage zumindest eine Strecke umfasst, welche aus Streckenabschnitten zusammengesetzt ist, wobei Fahrzeuge auf der Strecke bewegbar sind und eine elektronische Schaltung zur Beeinflussung zumindest der Geschwindigkeit des Fahrzeuges umfassen,
wobei entlang der Strecke Codierungen angebracht sind, wobei das Fahrzeug zumindest einen Sensor, insbesondere zur Erfassung der Codierungen, umfasst, der mit der elektronischen Schaltung verbunden ist,
wobei zwischen einem oder mehreren Fahrzeugen und zumindest einer stationären Einheit Datenaustausch ausführbar ist,
wobei das Verfahren folgende Schritte umfasst:
- Zumindest bei Inbetriebnahme wird eine Tabelle in die elektronische Schaltung des Fahrzeuges geladen,
- dass folgende Schritte in zeitlichen Abständen wiederholt werden:
   i) die Information über die Codierung wird erfasst und der elektronischen Schaltung des Fahrzeuges zugeleitet,
   ii) der erfassten Information wird mittels der Tabelle derjenige Streckenabschnitt bestimmt, in welchem sich das Fahrzeug befindet,
   iii) eine Nachricht von einer stationären Einheit wird empfangen, wobei die Nachricht aus Nachrichtenteilen zusammengesetzt ist, die jeweils Streckenabschnitten zugeordnet sind,
   iv) der Nachrichtenteil, welcher dem bestimmten Streckenabschnitt zugeordnet ist, wird verwendet und die darin enthaltenen Befehle ausgeführt,
   v) derjenige Nachrichtenteil, welcher einem benachbarten Streckenabschnitt zugeordnet ist, insbesondere derjenige der als nächstes nach Vorausberechnung erreicht sein wird, wird gespeichert,
   vi) die Information über die Codierung wird wiederholt erfasst und der elektronischen Schaltung des Fahrzeuges zugeleitet,
   vii) der erfassten Information wird mittels der Tabelle derjenige Streckenabschnitt bestimmt, in welchem sich das Fahrzeug befindet,
   viii) falls der benachbarte Streckenabschnitt erreicht ist, wird die im nunmehr neuen Streckenabschnitt zugeordnete Information, wie Befehle, ausgeführt,
   ix) die Punkte iii) bis ix) werden mehrfach wiederholt.

Von Vorteil ist dabei, dass das Fahrzeug bei Inbetriebnahme derartige Information zum Abspeichern erhält, dass es in der Lage ist, mit Wissen über seinen Streckenabschnitt, in welchem es sich befindet, die Anteile der an alle gesendeten Nachricht zu entnehmen und auszuführen, die für den Streckenabschnitt bestimmt sind. Die Einfachheit des Verfahrens liegt auch darin, dass die Nachricht immer an alle Fahrzeuge geschickt wird und der Streckencontroller berücksichtigen kann aber nicht muss, an welcher Position das Fahrzeug sich befindet.

Weiter vorteilig ist, dass mittels der Positionserfassung durch das Fahrzeug selbst streckenseitige Sensoren eingespart werden können.

In einer weiteren, noch vorteilhafteren Ausgestaltung ist vorteilig, dass die Übertragung von Energie und/oder Information den Aufwand reduzierbar macht, indem eine berührungslose Übertragung ausgeführt wird. Dies verlängert auch die Standzeit, also Lebensdauer, weil keine Verschleißkomponenten notwendig sind.

Von Vorteil ist dabei, dass die zu den Abläufen gehörende Software nicht während des Betriebs der Anlage übertragen werden muss. Stattdessen sind nur die Zuordnungsinformationen zu übertragen, also beispielsweise in Form von Parametern. Dies spart Zeit und ermöglicht somit die Ausführung zeitkritischer Anwendungen.
Denn es können pro Sekunde mehr Informationen übertragen werden. Vorteilig ist auch, dass die Fahrzeuge einen derart großen Speicher aufweisen, dass die Software zu allen möglichen vorgenannten Abläufen bei Inbetriebnahme in den Speicher ladbar ist. Beim Betrieb hingegen ist nur noch ein Parameter zu übertragen, der die Aktivierung oder Deaktivierung des jeweils abzuarbeitenden Ablaufs umfasst. Somit ist nur ein geringer Datenstrom notwendig und daher eine schnelle Wiederholungsrate des Nachrichtenübertragens.

Bei einer vorteilhaften Ausgestaltung wird der Datenaustausch zwischen den Fahrzeugen und der stationären Einheit zumindest teilweise berührungslos ausgeführt. Von Vorteil ist dabei, dass keine verschleißbehafteten Teile notwendig sind.

Bei einer vorteilhaften Ausgestaltung tauschen die Fahrzeuge auch untereinander Daten aus. Von Vorteil ist dabei, dass Kollisionen der Fahrzeuge vermeidbar sind.

Bei einer vorteilhaften Ausgestaltung sind die Fahrzeuge berührungslos mit Energie und Information versorgt. Von Vorteil ist dabei, dass keine verschleißbehafteten Teile notwendig sind und derselbe Primärleiter für die Versorgung mit Energie und auch höherfrequent aufmodulierter Information verwendbar ist.

Bei einer vorteilhaften Ausgestaltung umfasst die stationäre Einheit einen Streckencontroller, der aus einer Datenbank eines Rechnernetzwerkes mit Daten versorgbar ist, wobei vom Rechnernetzwerk Mittel zur Anzeige umfasst sind, die den Zustand der Anlage oder die wesentlichen Zustandsinformationen anzeigbar machen. Von Vorteil ist dabei, dass eine übersichtliche, also schnell und einfach erfassbare Visualisierung ausführbar ist, die es erlaubt Einfluss zu nehmen auf die Betriebsweise der gesamten Anlage.

Die Erfindung ist besonders vorteilhaft bei einer Elektrohängebahn mit vielen Fahrzeugen oder bei einem fahrerlosen Transportsystem anwendbar, wenn die Fahrzeuge berührungslos mit Energie und Information versorgt sind. Denn auf diese Weise ist weniger Reibung und somit auch weniger Verschleiß vorhanden und es kann eine höhere Standzeit erreicht werden und/oder die Geschwindigkeit der Fahrzeuge erhöht werden. Die Erfindung ermöglicht aber auch bei diesen höheren Geschwindigkeiten und den damit verbundenen kürzeren Reaktionszeiten ein Funktionieren der Anlage.

Weitere Vorteile ergeben sich aus den Unteransprüchen.

### Bezugszeichenliste

1 Streckendesigner
2 Datenbank
3 Streckencontroller
4 dezentrale Einheit
5 dezentrale Einheit ohne Streckencontroller
6 Router
7 SPS
8 Rechnernetzwerk
9 Fahrzeuge mit Schiene
10 Switch
a: Strecke
b: Streckenbereich
c: Fahrzeug
d: Nachricht
e: Nachrichtenteil für einen Streckenbereich
f: Antwort des Fahrzeuges für einen Streckenbereich
g: Streckencontroller

Die Erfindung wird nun anhand von Abbildungen näher erläutert:
Die Anlage umfasst eine Strecke a, wie beispielsweise ein Schienensystem, wobei diese Strecke a aus Streckenbereichen b zusammengesetzt ist.

Auf der Strecke a sind Fahrzeuge (c,9) bewegbar. Diese umfassen Antriebe mit einer elektronischen Steuerung. Dabei kann der Antrieb bei verschiedenen erfindungsgemäßen Ausführungsbeispielen mittels der elektronischen Steuerung regelbar sein oder auch nur ein- und ausschaltbar, also steuerbar. Die elektronische Steuerung tauscht Daten aus mit einer stationären dezentralen Einheit (4,5), die mit weiteren Rechnern, wie SPS, Rechnernetzwerk 8 und dergleichen, zum Datenaustausch verbunden ist. Der Datenaustausch ist jeweils berührungslos oder über elektrische Leitungen ausgeführt. Die berührungslose Übertragung vom stationären zum beweglichen Teil, also dem Fahrzeug oder den Fahrzeugen, ist von besonderem Vorteil, da nur geringe Störungen auftreten. Berührungslose Übertragung ist per elektromagnetische Wellen im MHz oder GHz Bereich vorgesehen. In erster Variante ist ein geschlitzter Koaxialleiter entlang der Strecke verlegbar, wobei das Fahrzeug eine Antenne im Bereich des Schlitzes entlang führt, also im Nahfeld. In zweiter Variante ist auch ein Ausleuchten des Raumes mit Funkwellen ausführbar, also das Verwenden des Fernfeldes, wobei in diesem Fall das Fahrzeug eine entsprechend ausgebildete Antenne aufweist. Bei einem weiteren erfindungsgemäßen Ausführungsbeispiel ist das Fahrzeug aus einem langgestreckten Primärleiter induktiv über eine Sekundärspule elektrisch zu versorgen und es wird zusätzlich die Information höherfrequent aufmoduliert.

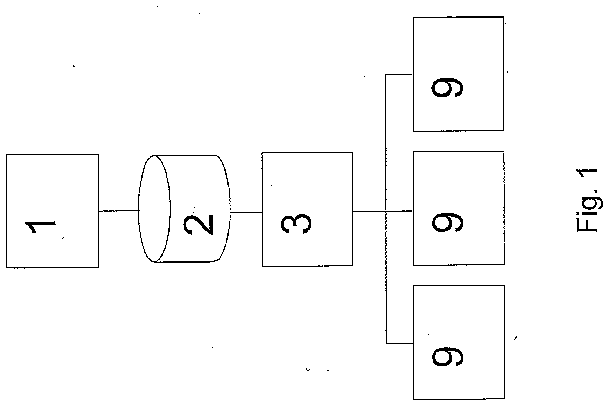

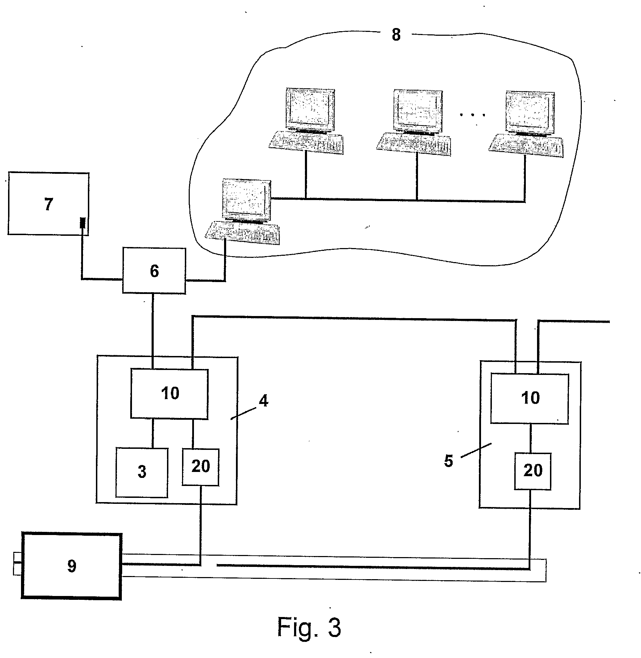

In Figur 3 ist das beschriebene System skizziert. Funktional wichtige Einheiten sind auch in Figur 1 dargestellt. Im Rechnernetzwerk 8 wird die physikalische Strecke a mit ihren Streckenbereichen b abgebildet und jedem Streckenabschnitt seine Funktion zugeordnet. Ein Streckenabschnitt b ist beispielsweise ein gerades Stück oder alternativ ein Abschnitt mit Weiche. Auf einem der Rechner des Rechnernetzwerkes 8 wird dazu ein Programm, das im Folgenden auch als Streckendesigner 1 bezeichnet wird, benutzt. Dieses ist verbunden mit einer Datenbank 2. Aus dieser werden ein Streckencontroller 3 oder mehrere Streckencontroller 3 versorgt, die Teil der dezentralen Einheit 4 sind. Mit dieser dezentralen Einheit kann auch optional noch eine SPS verbunden sein. Zwischengeschaltet kann auch noch ein Switch 10, ein AccessPoint 20 oder ein Router 6 sein. Jedoch ist die SPS nicht wesentlich und kann bei der Erfindung auch weggelassen werden. Die ist nur notwendig für periphere Einheiten oder Funktionen.

Für die Erfindung ist also ein Streckendesigner 1, eine Datenbank 2, ein Streckencontroller 3, ein oder mehrere Fahrzeuge 9 vorgesehen. Die Streckentopologie und weitere Daten werden graphisch im Streckendesigner 1 eingegeben, der diese Informationen in der Datenbank speichert. Der Streckencontroller 3 kann aufgrund dieser Daten die Strecke a und somit die Fahrzeuge (9,c), die sich auf der Strecke a befinden, koordinieren.

Der Streckencontroller 3 kann bei weiteren erfindungsgemäßen Ausführungsbeispielen mit Anzeigemitteln, wie beispielsweise graphisches Display mit Touch, Touchscreen oder dergleichen, ausgerüstet werden. Damit ist Diagnose und Handbetrieb ermöglicht.
In weiteren Ausführungsbeispielen ist der Streckencontroller 3 elektronisch mit diesen kombinierten Anzeige- und Eingabemitteln mitteln derart verbunden dass, Diagnose und Handbetrieb aus der Ferne ausführbar ist.

In Figur 3 ist auch eine dezentrale Einheit 5 ohne Streckencontroller gezeigt, die einen anderen Streckenabschnitt b versorgt als die dezentrale Einheit 4 mit Streckencontroller 3. Dafür ist der Streckencontroller 3 derart ausgebildet, dass er die dezentrale Einheit 5 mitversorgen kann mit Information. Der Streckencontroller 3 ist also in diesem Ausführungsbeispiel derart ausgebildet, dass er zwei Streckenabschnitte versorgt.

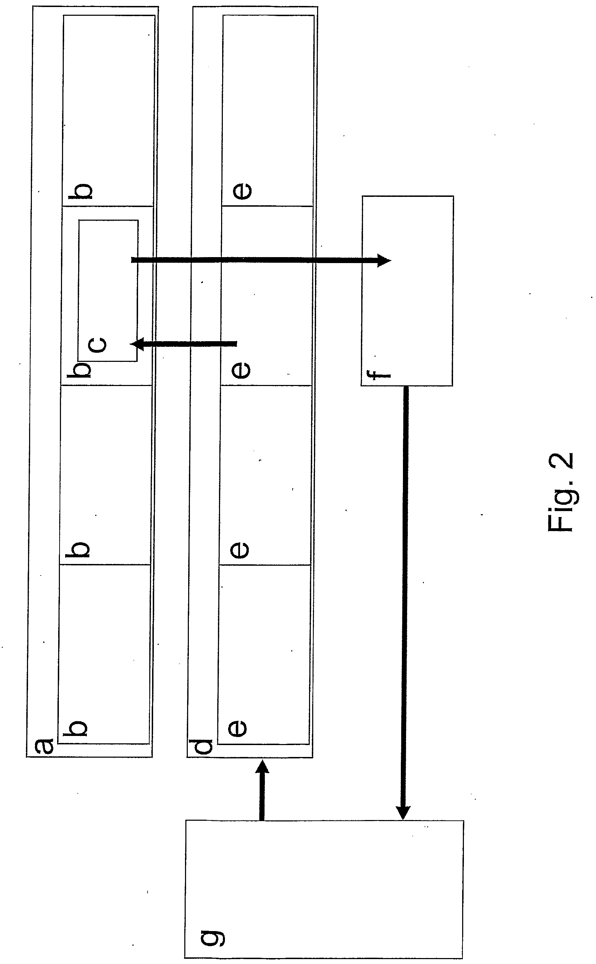

In Figur 2 ist der Aufbau und die Funktionsweise der Datentelegramme skizziert. Dabei befindet sich das Fahrzeug c in einem der Streckenabschnitte b der Strecke a. Der Streckencontroller g sendet in zeitlichen Abständen eine Nachricht, also ein Datentelegramm, wobei die Nachricht d aus Nachrichtenteilen e zusammengesetzt ist, die für jeweils einen Streckenbereich bestimmte Informationen aufweisen. Die Nachrichten werden regelmäßig oder nach Bedarf versendet.

Das Fahrzeug umfasst einen Sensor, der eine an der Strecke angebrachte Kennung, also Codierung, abliest und somit eine Positionsinformation aufnimmt. Das Fahrzeug erhält bei Inbetriebnahme vom Streckencontroller eine Tabelle, mittels der es in der Lage ist, den Streckenabschnitt, zu welchem die Positionsinformation gehört, zu identifizieren.

Das Fahrzeug empfängt also die gesamte Nachricht d und entnimmt denjenigen Nachrichtenteil e, welcher für diesen Streckenabschnitt bestimmt ist, in welchem das Fahrzeug sich gerade befindet. Das Fahrzeug führt die enthaltenen Informationen, wie Befehle oder dergleichen aus. Beispielsweise das Fahren bis zu einer Position. Das Fahrzeug kann Datentelegramme f zurücksenden an den Streckencontroller, beispielsweise als Antwort. Dabei werden Statusinformationen, wie beispielsweise die Position und/oder die Geschwindigkeit versendet.

Wesentlich ist also, dass alle Fahrzeuge die Nachricht des Streckencontrollers empfangen und jedes Fahrzeug nur die für es bestimmte Information herausfiltern in Abhängigkeit von dem Streckenabschnitt, in welchem es sich befindet.

Der Streckencontroller überprüft die erhaltenen Daten auch in logischer Weise und generiert aus den erreichten Status und den weiteren Informationen das nächste Datentelegramm, das er versendet.

Bei der Erfindung ist wesentlich, dass die Fahrzeuge nicht von einer SPS individuell bedient werden, also ihren Status senden und die SPS erst dann einen Befehl für das Fahrzeug überträgt, sondern dass bei der Erfindung das Fahrzeug auch Befehle empfängt, die für einen anderen Streckenabschnitt bestimmt sind. Das Fahrzeug kann dann aber schon die Information für den nächsten benachbarten Abschnitt speichern und bei Erreichen des nächsten Streckenabschnittes b diese Information ausführen. Die Erfindung ermöglicht also eine streckenorientierte zeitunkritische Kommunikation. Denn das Fahrzeug führt einfach die zuletzt empfangene Information für den neuen Abschnitt aus.

Bei anderen erfindungsgemäßen Ausführungsbeispielen ist es auch erlaubt, dass sich in einem Streckenbereich b auch mehrere Fahrzeuge c befinden, wenn diese miteinander kommunizieren. Bei besonders großen Strecken können auch mehrere Telegramme von einem oder mehreren Streckencontrollern versendet werden. Diese können bei Bedarf gegeneinander abgeschottet werden, so dass Fahrzeuge nur die für den eigenen Bereich relevanten Telegramme empfangen.

Die Erfindung ist anwendbar auf Elektrohängebahnen, fahrerlose Transportsysteme (FTS, BTS o.ä.), Schubskidanlagen und ähnliche Systeme.

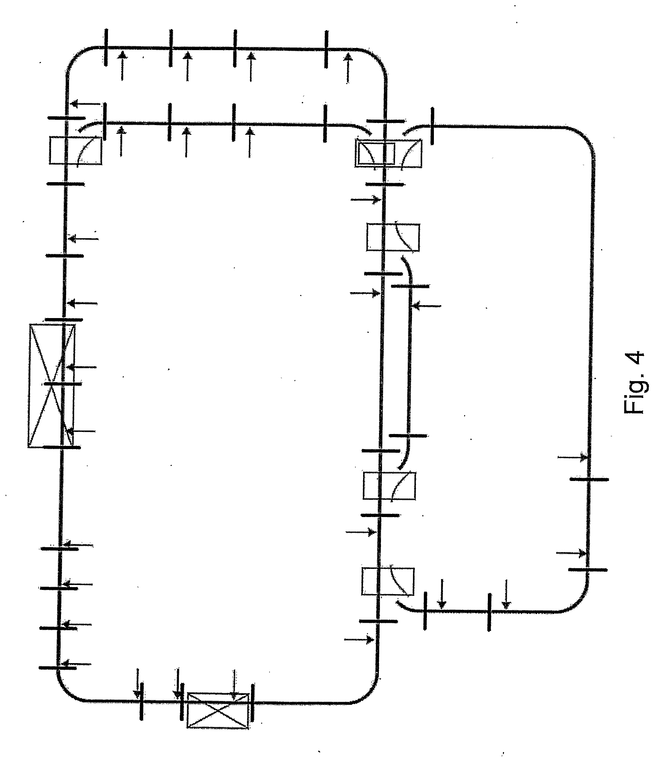

Figur 4 zeigt ein Beispiel für eine erfindungsgemäße Anlage, bei der die Streckenabschnitte b durch dicke Striche, die jeweils senkrecht zur Strecke orientiert sind, abgetrennt sind. Die Pfeile deuten eine Halteposition an, an der das Fahrzeug anhalten soll, falls es keine Durchfahr-Information erhalten hat.

Das Fahrzeug weist einen Speicher auf, in welchem Abläufe P1, P2, P3 usw. enthalten sind. Jeder Ablauf entspricht einer Betriebsweise für verschiedene Sorten von Streckenabschnitten. Beispielsweise gibt es einen geraden Abschnitt oder einen Streckenabschnitt mit Weiche. Welcher Ablauf für welchen Streckenabschnitt zu aktivieren ist, wird durch die von dem Streckencontroller gesendete Nachricht bestimmt. Somit ist also zu jedem Zeitpunkt jedem Streckenabschnitt ein Ablauf, also eine klarer funktioneller Ablauf zugeordnet.

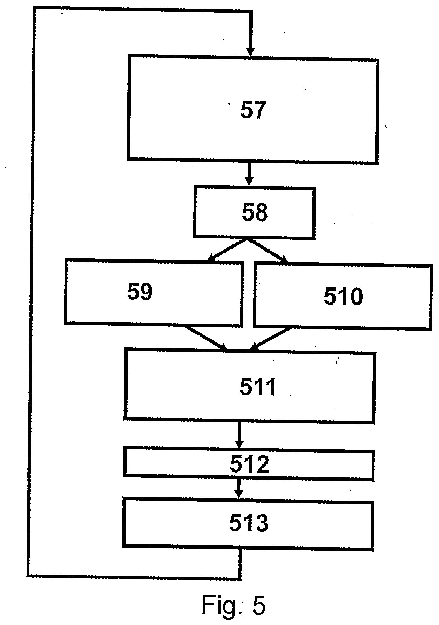

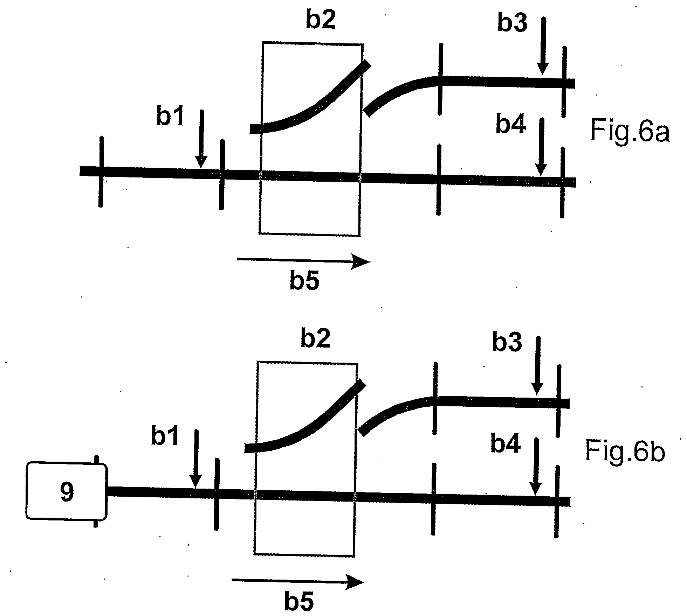

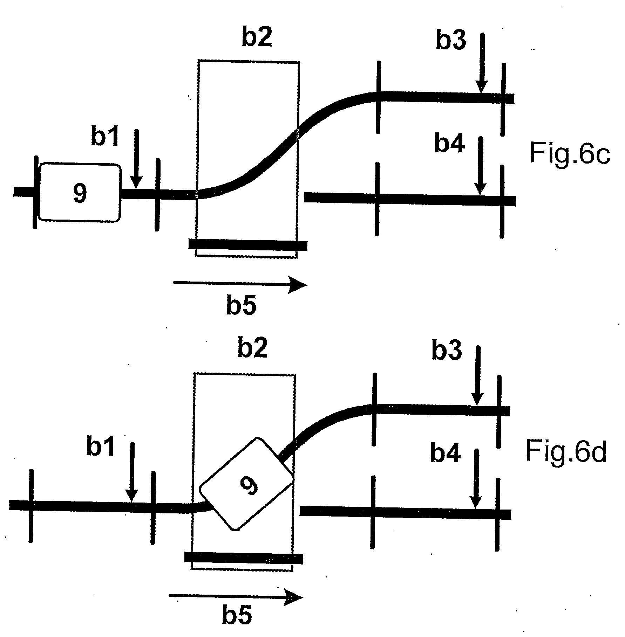

Figur 5 zeigt beispielhaft den funktionellen Ablauf für einen Streckenabschnitt mit Weiche, der in Figur 6a skizziert ist. Dabei umfasst der Streckenabschnitt b1 eine mit einem Pfeil gekennzeichnete Position. Der Streckenabschnitt b2 umfasst eine Weiche. Der Streckenabschnitt b3 und b4 umfasst jeweils ein gerades Stück. In Figur 6b ist ein vor dem Streckenabschnitt b1 einfahrendes Fahrzeug 9 skizziert. Unter Punkt 57 wird der Befehl "Fahren bis auf Position" ausgeführt, wie in Figur 6c skizziert. Spätestens, wenn das Fahrzeug die Position erreicht hat, wird unter Punkt 58 die Konfiguration geprüft. Wenn die Weichenstellung aus einer lokalen Datenbank abfragbar ist, wird dies unter Punkt 59 ausgeführt. Wenn die Weichenstellung von einer überlagerten Datenbank abfragbar ist, wird dies unter Punkt 510 ausgeführt. Unter Punkt 511 wird die Weiche gestellt und gewartet bis eine Information eingetroffen ist, die die OK-Rückmeldung der Weiche beinhaltet. Unter Punkt 512 wird dann der Befehl "Durchfahren" ausgeführt, wie in Figur 6d skizziert. Bei genügender Größe der Anlage ist es somit ermöglicht, dass das Fahrzeug ohne Anzuhalten durchfahren kann, weil der Befehl für das Durchfahren der Weiche schneller abgesendet wird, als das Fahrzeug die mit Pfeil gekennzeichnete Halteposition erreichen konnte. Danach wird unter Punkt 513 gewartet bis das Fahrzeug den Streckenabschnitt verlassen hat.

Für die Erfindung ist bei weiteren erfindungsgemäßen Ausführungsbeispielen ausführbar, dass von den Abläufen (P1, P2, P3, ... PN) mindestens zwei jeweils einer Sorte von Streckenabschnitten zugeordnet sind und sich nur um auf dieser Sorte von Streckenabschnitt auszuführende Befehle, also Kommandos, unterscheiden. Somit ist bei Inbetriebnahme im Fahrzeug hinterlegbar, welchem Streckenabschnitt welche Untermenge von Abläufen zugeordnet ist, wobei diese Abläufe der Untermenge jeweils sich auf denselben Streckentyp, beispielsweise ein Abschnitt mit einer Weiche, beziehen. Der Unterschied zwischen den Abläufen innerhalb der Untermenge ist nur im Bereich der auszuführenden Kommandos gegeben. Während des Betriebs sendet die stationäre Einheit an das Fahrzeug Informationen, die dieses Kommando auswählen. Somit ist der zeitlich jeweils gültige Ablauf der Untermenge während des Betriebes flexibel anpassbar. Der Streckentyp ist jedoch fest hinterlegt.

Insbesondere ist es auch ausführbar, dass Die Erfindung ist von den Abläufen (P1, P2, P3, ... PN) mindestens zwei einer Sorte von Streckenabschnitten zugeordnet sind und sich nur um auf dieser Sorte von Streckenabschnitt auszuführende Befehle, also Kommandos, unterscheiden, wobei das Kommando abhängig vom empfangenen Nachrichtenteil aktiviert ist oder deaktiviert ist.

Ein Beispiel für eine Sorte von Streckenabschnitten ist ein zumindest eine Weiche umfassender Abschnitt. Ein weiteres Beispiel ist ein eine Halteposition umfassender Abschnitt.

Bei der Erfindung ist der Begriff "Strecke" und "Streckenabschnitt" für schienengebundene oder schienenlose System verwendbar, insbesondere also für Systeme zum Transport, bei denen kein Fahrer notwendig ist, also fahrerlose Transportsysteme. Beispiele sind Elektrohängebahn, Schubskid-System oder andere mobile Montageplattformen.

## Patentansprüche

1. Verfahren zum Betreiben einer Anlage,
wobei die Anlage zumindest eine Strecke (a) umfasst, welche aus Streckenabschnitten (b) zusammengesetzt ist,
wobei Fahrzeuge (c; 9) auf der Strecke (a) bewegbar sind und eine elektronische Schaltung zur Beeinflussung zumindest der Geschwindigkeit des Fahrzeuges (c; 9) umfassen,
wobei das Fahrzeug (c; 9) Mittel zur Positionserfassung umfasst,
wobei zwischen einem oder mehreren Fahrzeugen (c; 9) und zumindest einer stationären Einheit (g) ein Datenaustausch ausführbar ist, **dadurch gekennzeichnet,**
- **dass** zumindest bei Inbetriebnahme eine Tabelle in die elektronische Schaltung des Fahrzeuges (c; 9) geladen wird,
- **dass** folgende Schritte in zeitlichen Abständen wiederholt werden:
i) die Information über die Position wird erfasst und der elektronischen Schaltung des Fahrzeuges (c; 9) zugeleitet,
ii) aus der erfassten Information wird mittels der Tabelle derjenige Streckenabschnitt (b) bestimmt, in welchem sich das Fahrzeug (c; 9) befindet,
iii) eine Nachricht (d) von einer stationären Einheit wird empfangen, wobei die Nachricht (d) aus Nachrichtenteilen (e) zusammengesetzt ist, die jeweils Streckenabschnitten (b) zugeordnet sind,
iv) der Nachrichtenteil (e), welcher dem bestimmten Streckenabschnitt (b) zugeordnet ist, wird verwendet und die darin enthaltenen Befehle ausgeführt,
v) derjenige Nachrichtenteil (e), welcher einem benachbarten Streckenabschnitt (b) zugeordnet ist, insbesondere derjenige der als nächstes nach Vorausberechnung erreicht sein wird, wird gespeichert,
vi) die Information über die Position wird wiederholt erfasst und der elektronischen Schaltung des Fahrzeuges (c; 9) zugeleitet,
vii) der erfassten Information wird mittels der Tabelle derjenige Streckenabschnitt (b) bestimmt, in welchem sich das Fahrzeug (c; 9) befindet,
viii) falls der benachbarte Streckenabschnitt (b) erreicht ist, wird dem nunmehr neuen Streckenabschnitt (b) zugeordnete Information, wie Befehle, ausgeführt,
ix) die Punkte iii) bis viii werden mehrfach wiederholt.

2. Verfahren nach Anspruch 1, **dadurch gekennzeichnet, dass** die Mittel zur Positionserfassung zum Erfassen und/oder Ablesen von entlang der Strecke (a) angebrachten Codierungen geeignet sind, und die Mittel mit der elektronischen Schaltung verbunden sind.

3. Verfahren nach mindestens einem der vorangegangenen Ansprüche,
**dadurch gekennzeichnet, dass**
der Datenaustausch zwischen den Fahrzeugen (c; 9) und der stationären Einheit (g) zumindest teilweise berührungslos ausgeführt wird.

4. Verfahren nach mindestens einem der vorangegangenen Ansprüche,
**dadurch gekennzeichnet, dass**
die Fahrzeuge (c; 9) auch untereinander Daten austauschen.

5. Fahrerloses Transportsystem **dadurch gekennzeichnet, dass**
das fahrerloses Transportsystem gemäß einem Verfahren nach wenigstens einem der vorangehenden Ansprüche betrieben wird und die Fahrzeuge (c; 9) berührungslos mit Energie und Information versorgt sind.

6. Fahrerloses Transportsystem nach mindestens einem der vorangegangenen Ansprüche,
**dadurch gekennzeichnet, dass**
das fahrerlose Transportsystem schienengebunden und/oder schienenlos ist und/oder als Elektrohängebahn, als Schubskid-System oder als mobile Montageplattform ausgeführt ist.

7. Fahrerloses Transportsystem nach mindestens einem der vorangegangenen Ansprüche,
**dadurch gekennzeichnet, dass**
die stationäre Einheit (g) einen Streckencontroller (3) umfasst, der aus einer Datenbank eines Rechnernetzwerkes (8) mit Daten versorgbar ist, wobei vom Rechnernetzwerk (8) Mittel zur Anzeige umfasst sind, die den Zustand der Anlage oder die wesentlichen Zustandsinformationen anzeigbar machen.

## Claims

1. A method of operating an installation,
wherein the installation comprises at least one path (a) composed of path portions (b), wherein vehicles (c; 9) are movable on the path (a) and comprise an electronic circuit for influencing at least the speed of the vehicle (c; 9),
wherein the vehicle (c; 9) comprises means for position detection,
wherein data can be exchanged between one or a plurality of vehicles (c; 9) and at least one stationary unit (g),
**characterised in that**
- a table is loaded into the electronic circuit of the vehicle (c; 9) at least upon start up,
- the following steps are repeated at time intervals:
i. the information about the position is detected and supplied to the electronic circuit of the vehicle (c; 9),
ii. that path portion (b) in which the vehicle (c; 9) is located is ascertained from the detected information by means of the table,
iii. a message (d) is received from a stationary unit, wherein the message (d) is composed of message parts (e) which are each associated with path portions (b),
iv. the message part (e) associated with the specific path portion (b) is used and the instructions contained there are executed,
v. that message part (e) which is associated with an adjacent path portion (b), in particular that path portion which will be reached next according to an advance calculation, is stored,
vi. the information about position is repeatedly detected and supplied to the electronic circuit of the vehicle (c; 9),
vii. that path portion (b) in which the vehicle (c; 9) is located is ascertained from the detected information by means of the table,
viii. if the adjacent path portion (b) is reached, the information, such as instructions, associated with the new path portion (b) is executed,
ix points iii to viii are repeated multiple times.

2. A method according to Claim 1,
**characterised in that**
the means for position detection are suitable for detecting and/or reading codings attached along the path (a), and the means are connected to the electronic circuit.

3. A method according to at least one of the preceding claims,
**characterised in that**
the data exchange between the vehicles (c; 9) and the stationary unit (g) is at least partially contactless.

4. A method according to at least one of the preceding claims,
**characterised in that**
the vehicles (c; 9) also exchange data amongst one another.

5. A driverless transport system, **characterised in that**
the driverless transport system is operated in accordance with a method according to at least one of the preceding claims and the vehicles (c; 9) are supplied with energy and information contactlessly.

6. A driverless transport system according to at least one of the preceding claims,
**characterised in that**
the driverless transport system is railborne and/or rail-less and/or is in the form of a electric overhead trolley conveyer, a push-skid system or a mobile assembly platform.

7. A driverless transport system according to at least one of the preceding claims,
**characterised in that**
the stationary unit (g) comprises a path controller (3) which can be supplied with data from a database of a computer network (8), wherein the computer network (8) comprises display means which render the state of the installation or the significant status information displayable.

## Revendications

1. Procédé dévolu à l'exploitation d'une installation,
ladite installation comportant au moins un itinéraire (a) composé de segments (b), sachant que des véhicules (c ; 9) peuvent être mis en mouvement sur ledit itinéraire (a), et incluent un circuit électronique pour influencer au moins la vitesse du véhicule (c ; 9), lequel véhicule (c ; 9) renferme des moyens de détection d'emplacements,
un échange de données pouvant être effectué entre un ou plusieurs véhicule(s) (c ; 9) et au moins une unité fixe (g),
**caractérisé par le fait**
- **qu'**un tableau est chargé dans le circuit électronique du véhicule (c ; 9), au moins lors de la mise en service,
- **que** les étapes suivantes sont réitérées à intervalles de temps :
i) l'information relative à l'emplacement est saisie et est délivrée au circuit électronique du véhicule (c ; 9),
ii) le segment (b) de l'itinéraire, sur lequel ledit véhicule (c ; 9) se trouve, est déterminé sur la base de l'information saisie,
iii) un message (d) émanant d'une unité fixe est reçu, ledit message (d) étant composé de parties (e) respectivement associées à des segments (b) de l'itinéraire,
iv) la partie (e) du message, associée au segment déterminé (b) dans l'itinéraire, est utilisée et les instructions qu'elle contient sont exécutées,
v) la partie (e) du message associée à un segment voisin (b) dans l'itinéraire, en particulier celle qui sera atteinte au stade successif d'après un calcul préalable, fait l'objet d'une mémorisation,
vi) l'information relative à l'emplacement est saisie de nouveau et est délivrée audit circuit électronique du véhicule (c ; 9),
vii) le segment (b) de l'itinéraire, sur lequel ledit véhicule (c ; 9) se trouve, est déterminé au moyen du tableau, sur la base de l'information saisie,
viii) dans le cas où le segment voisin (b) est atteint dans l'itinéraire, l'information telle que des instructions, associée au segment (b) désormais nouveau, fait l'objet d'une exécution,
ix) les points iii) à viii) sont réitérés à maintes reprises.

2. Procédé selon la revendication 1,
**caractérisé par le fait que**
les moyens de détection d'emplacements se prêtent à la saisie et/ou à la lecture de codages implantés le long de l'itinéraire (a), et lesdits moyens sont connectés au circuit électronique.

3. Procédé selon au moins l'une des revendications précédentes,
**caractérisé par le fait que**
l'échange de données, entre les véhicules (c ; 9) et l'unité fixe (g), est effectué au moins en partie avec absence de contact.

4. Procédé selon au moins l'une des revendications précédentes,
**caractérisé par le fait que**
les véhicules (c ; 9) échangent également des données entre eux.

5. Système de transport sans conducteur, **caractérisé par le fait que** ledit système de transport sans conducteur est exploité suivant un procédé conforme à au moins l'une des revendications précédentes, et les véhicules (c ; 9) sont alimentés en énergie et en informations avec absence de contact.

6. Système de transport sans conducteur selon au moins l'une des revendications précédentes,
**caractérisé par le fait que**
ledit système de transport sans conducteur est tributaire de rails et/ou dépourvu de rails, et/ou est réalisé en tant que convoyeur électrique suspendu, système de convoyage à plateaux ou plate-forme mobile de montage.

7. Système de transport sans conducteur selon au moins l'une des revendications précédentes,
**caractérisé par le fait que**
l'unité fixe (g) inclut une commande (3) d'itinéraires, qui peut être alimentée en données à partir d'une banque de données d'un réseau informatique (8), lequel réseau informatique (8) comprend des moyens d'affichage aptes à visualiser l'état de l'installation, ou les informations d'état essentielles.
